# EUROPÄISCHE PATENTSCHRIFT

(11) **EP 0 745 497 B1**
(45) Veröffentlichungstag und Bekanntmachung des Hinweises auf die Patenterteilung: **29.09.1999**
(21) Anmeldenummer: 96105963.1
(22) Anmeldetag: 16.04.1996
(51) Int. Cl.: B60H 1/32, F25B 43/00

(54) **Trocknerbehälter für ein Klimasystem**
Drier vessel for air conditioning systems
Réservoir dessicateur pour système de conditionnement

(30) Priorität: 01.06.1995 DE 29509086 U
(43) Veröffentlichungstag der Anmeldung: 04.12.1996
(73) Patentinhaber: Ehs, Eugen, 80637 München (DE)
(72) Erfinder: Ehs, Eugen, 80637 München (DE)
(74) Vertreter: Grünecker, Kinkeldey, Stockmair & Schwanhäusser Anwaltssozietät

(56) Entgegenhaltungen:
- EP-A- 0 261 309
- EP-A- 0 547 625
- DE-A- 3 606 029
- DE-U- 9 011 384
- US-A- 4 788 833
- US-A- 5 184 480
- US-A- 5 340 231

## Beschreibung

Die Erfindung betrifft einen Trocknerbehälter der im Oberbegriff des Patentanspruchs 1 angegebenen Art.

Der in ein Fahrzeugklimasystem integrierte Trocknerbehälter wird mit einem wasseraufnehmenden Stoff gefüllt und in den Kältemittelkreislauf eingesetzt, um dem Kältemittel permanent Feuchtigkeit zu entziehen. Der Trocknerbehälter muß druck- und temperaturfest sein.

Früher wurden Trocknerbehälter in Fahrzeugklimasystemen aus Tiefziehblechbehälterteilen gebildet, die in der Herstellung teuer und vor allem schwer waren. Auch Aluminium und Aluminiumlegierungen wurden für diesen Zweck benutzt. Die DE-A-3 606 029 zeigt einen Trocknerbehälter gemäß dem Oberbegriff des Anspruchs 1.

Vor allem aus Gewichtsgründen wurde von den Metall-Trocknerbehältern abgegangen. Es sind in der weiteren Entwicklung Trocknerbehälter bekannt geworden, die aus einem formgebenden Innenbehälter und einer Glasfaser-Kunststoff-Bewicklung bestehen (EP-A-0 261 309) oder einen strumpfartigen Glasfaser-Kunststoff-Überzug aufweisen, wobei die GFK-Armierung die notwendige Druck- und Temperaturfestigkeit erbringt. Diese Trocknerbehälter sind wesentlich leichter als die althergebrachten Trocknerbehälter. Aufgrund des Herstellungsaufwandes sind solche GFK-Trocknerbehälter verhältnismäßig teuer. Außerdem sind sie schwierig zu recyceln. Gemäß DE-U 90 11 384 wird bei einem mit einer gewickelten Faserverstärkung versehenen Trocknbehälter ein mit Befestigungslaschen integral ausgebildetes Kupplungsstück eingesetzt. US-A-47 88 833 beschreibt einen Trocknerbehälter, der aus starkem Kunststoff-Material wie Noryll oder 420-Valox bestehenden Teilen zusammengebaut ist. Aus US-A-51 84 480 ist ein Akkumulator für Fahrzeug-Klimaanlagen bekannt, dessen einzelne Komponenten Kunststoff-Formteile sind, z.B. aus mit Glasmineral verstärktem Polyester. Schließlich wird in US-A-53 40 231 für überfahrbare Straßenmarkierungs-Elemente empfohlen, den Kunststoff Celstran für den Grundkörper zu verwenden, weil dieser Werkstoff hohe Schlag- und Kompressionsfestigkeits-Werte besitzt.

Der Erfindung liegt die Aufgabe zugrunde, einen Trocknerbehälter der eingangs genannten Art anzugeben, der trotz einfacher und kostengünstiger Herstellbarkeit den vorgeschriebenen Anforderungen hinsichtlich der Druck- und Temperaturfestigkeit für Fahrzeug-Klimasysteme problemlos gewachsen ist.

Die gestellte Aufgabe wird mit den Merkmalen des Patentanspruchs 1 gelöst.

Mit Langfasern verstärkter Thermoplast läßt sich kostengünstig im Spritzgußverfahren verarbeiten, wobei die Formen der Behälterteile im Hinblick auf den zur Verfügung stehenden Einbauraum in Fahrzeugen in einem großen Bereich frei wählbar ist. Überraschend erfüllt langfaserverstärkter Thermoplast, der nach einem Spritzgußverfahren verarbeitet wird, in Kombination mit dem speziell geformten Wandübergang, für solche Trocknerbehälter bestehenden Anforderungen an Druck- und Temperaturfestigkeit. Der harmonische Verlauf des Übergangs vermeidet die bei herkömmlichen Trocknerbehälterkonzepten oftmals gegebene Stufe oder Hinterschneidung zwischen einer Umfangswand und dem Boden, die bei einem langfaserverstärkten Thermoplast den Trocknerbehälter unter Druck- und Temperatureinfluß leicht bricht. Der neue Trocknerbehälter zeichnet sich durch seine einfache und kostengünstige Herstellung, auch in individuellen Formen, durch geringes Gewicht, und durch lange Standfestigkeit aus. Ein weiterer, wichtiger Vorteil ist die umweltfreundliche Wiederverwertbarkeit des Materials des Trocknerbehälters. Langfaserverstärkter Thermoplast ist ein neuer Faserverbundwerkstoff, der im Spritzgußverfahren verarbeitet bisher nur als Ersatz für Metallteile empfohlen wird, bei denen es auf hohe Zähigkeit und Steifigkeit, auch bei höheren Temperaturen, ankommt. Für Druckbehälter wird dieser Faserverbundwerkstoff nicht empfohlen.

Für die Praxis empfiehlt sich ein Faserverbundwerkstoff mit 35 bis 70 Gew.-% ca. 10mm langer Glasfasern. Dieser Faserverbundwerkstoff wird unter dem Handelsnamen "Celstran" von der Firma Hoechst AG (eingetragenes Warenzeichen der Firma Hoechst) in unterschiedlichen Einstellungen vertrieben und läßt sich mit Spritzgußmaschinen mit einem Spritzdruck von mehr als 130 t mit bewußt niedriggehaltenen Verarbeitungsparametern, wie Schneckendrehzahl, Staudruck und Einspritzgeschwindigkeit, einfach verarbeiten. In diesem Langfaserverbundwerkstoff sind die langen Glasfasern an die hitzestabilisierte Polypropylen- oder Polyamid-Matrix chemisch gekoppelt, um besonders hohe Zähigkeit und Steifigkeit auch bei höheren Temperaturen zu realisieren. Der Werkstoff "Celstran" wird in Datenblättern CELSTRAN der Firma Hoechst AG, Registriernummer 206265/93M4 aus 1993 und 295368/94M4 aus 1994 beschrieben.

Es wird bei Ausführungsvarianten durch die Form des Übergangs vermieden, daß im Querschnittsverlauf bzw. im Innenumfangswandverlauf eine Art Kerbe gebildet wird, in der unter dem Einfluß von Druck und Temperatur die Spannungen zur Beschädigung oder zum Bruch führen könnten.

Alternativ ist ein variierende Krümmungsradius günstig, mit dem unter dem Einfluß von Druck und Temperatur nur mehr problemlose Spannungsverhältnisse auftreten.

Formentechnisch günstig ist ferner die Fortführung der Übergangskrümmung auch in dem Bodenteil.

Eine herstellungstechnisch günstige, leicht zu montierende und gut zu wartende Ausführungsform enthält eine Gewinde-Schraubverbindung zwischen den Behälterteilen.

Geringe Herstellkosten sind mit einstückigen Spritzguß-Formteilen möglich. Die fertigen Behälterteile benötigen keine nennenswerte Nachbearbeitung mehr.

Günstig ist eine Ausführungsform bei der sich die Anschlußrohre problemlos anbringen lassen. Die Rohranschlußkanäle können dabei willkürlich positioniert werden, entsprechend den baulichen Anforderungen für den Trocknerbehälter beim späteren Einsatz. So wäre es durchaus möglich, einen Rohranschlußkanal in einem Behälterteil und den anderen Rohranschluß in einem anderen Behälterteil, und zwar an den Stellen zu positionieren, an denen die Rohre des Klimasystems auf dem kürzesten Weg anschließbar sind.

Bei einer weiteren Ausführungsform wird eine glatte Innenumfangswand des Trocknerbehälters erreicht.

Bei einer weiteren Ausführungsform erhöht die Schürze die Gestaltfestigkeit des Trocknerbehälters. Ferner wird der Verbindungsbereich verstärkt, und werden die Befestigungslaschen so angeformt, daß die Befestigung des Trocknerbehälters vereinfacht ist.

Eine außen angeformte Drehhilfe ist zweckmäßig für die Montage und Wartung, z.B. zum Austausch des Inhalts des Trocknerbehälters.

Bei einem Fassungsvermögen von ca. 550 cm³ und einer mittleren Wandstärke von in etwa 5,0mm ergibt sich bei kompakter Form des Trocknerbehälters ein wünschenswert geringes Gewicht bei verhältnismäßig großem Fassungsvermögen.

Anhand der Zeichnungen werden Ausführungsformen des Erfindungsgegenstandes erläutert. Es zeigen:
- Fig. 1: einen Längsschnitt durch eine erste Ausführungsform eines Trocknerbehälters, und
- Fig. 2: einen Längsschnitt durch eine andere Ausführungsform eines Trocknerbehälters.

Ein Trocknerbehälter T, insbesondere für Fahrzeugklimasysteme, besteht aus zwei halbschalenförmige Behälterteilen A, B, die beide einstückig aus einem langfaserverstärkten Thermoplast, wie mit ca. 10 mm langen glasfaserverstärktem Polyamid oder Polypropylen (Gewichtsanteil der Fasern zwischen 40 und 60 Gew.-%), bestehen. Der langfaserverstärkte Thermoplast ist nach einem Spritzgußverfahren in einer spritzgußmaschine mit mindestens 130 t druckverarbeitet und hat eine Dichte zwischen ca. 1,45 bis 1,69 g/cm³. Als Polymer wird Polyamid mit der Einstellung PA 66 oder Polypropylen eingesetzt. Die Behälterteile A, B sind in einem umlaufenden Verbindungsbereich V, z.B. mittels Innen- und Außengewinden 1, 2, verbunden. Denkbar wäre auch eine Verbindung in Form eines Bajonettverschlusses oder mittels eines Spannbandes od. dgl. Der Behälterteil B weist bei dieser Ausführungsform das Außengewinde 2 auf, das sich im Bereich eines annähernd zur Längsachse des Trocknerbehälters B parallelen Innenumfangswandbereich 3 erstreckt. Vom Innenumfangswandbereich 3 führt eine konkave Krümmung (Übergang 4) zu einem konkav gerundeten Bodenwandabschnitt 5, in dessen Mitte eine konvexe Verdickung 6 eingeformt ist. Außen ist am Behälterteil B eine Drehhilfe 7, z.B. ein Sechskant, einstückig angeformt. Die Wandstärke S der Behälterteile A, B ist über den größten Teil der Erstreckung ihrer Wand gleichförmig und liegt z.B. bei ca. 4 - 6 mm. Die Langfasern F sind in den Polymer eingebettet, so daß sich ein belastbares Faserskelett ergibt.

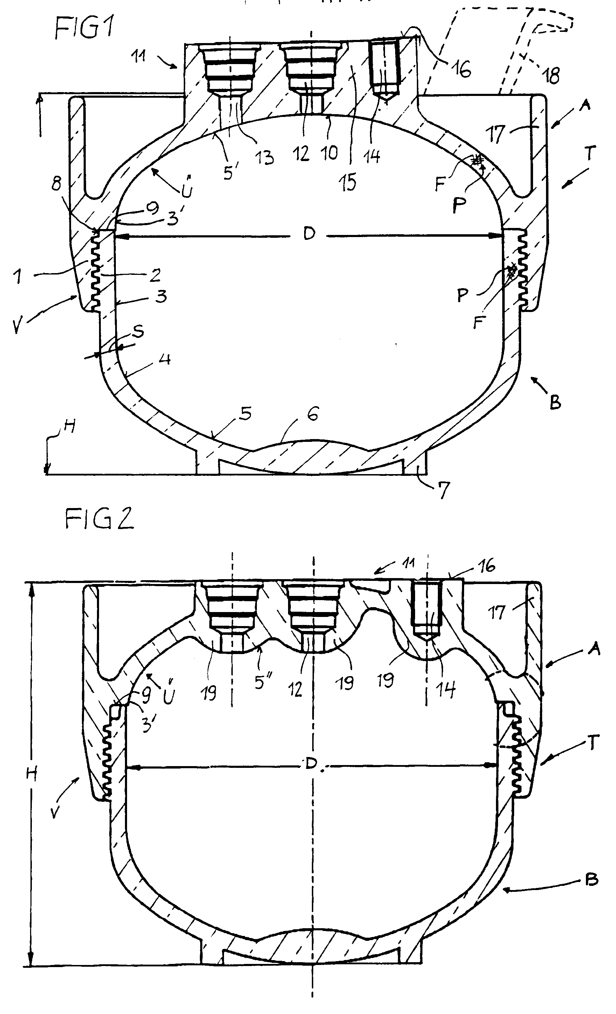

Der Behälterteil A weist in einer innenliegenden Aufnahme 8 das Innengewinde 1 auf. Die Aufnahme 8 führt mit einer annähernd radialen Schulter 9 bis zur Innenumfangswand 3'. Von der Innenumfangswand 3' benachbart zur Schulter 9 verläuft ein harmonisch konkav gerundeter Übergang Ü ohne Hinterscheidungen oder Winkel bis zur Innenbodenwand 5', die in den konkaven oder ebenen Innenboden 10 übergeführt ist. Am Behälterteil B sind bei dieser Ausführungsform Anschlußeinrichtungen 11 einstückig angeformt, und zwar Rohranschlußkanäle 12 und 13 und wenigstens eine diesen benachbarte Verankerungsbohrung 14. Die Rohranschluß-einrichtungen 11 sind in einem verdickten Wandbereich 15 untergebracht, der eine ebene Abschlußfläche 16 hat, wobei gemäß Fig. 1 die Wand nach außen verdickt ist.

Am Behälterteil A ist ferner eine umlaufende Schürze 17 angeformt, die etwa zylindrische Form hat und bei der gezeigten Ausführungsform unterhalb der Ebene der Fläche 16 endet. Die Schürze 17 könnte aber bis zur Ebene der Fläche 16 verlängert sein oder sogar darüber hinausgehen. An der Schürze 17 (bei dieser Ausführungsform) ist mindestens eine Befestigungslasche 18 einstückig angeformt. Die Befestigungslaschen 18 könnten auch an den Anschlußeinrichtungen 11 geformt sein.

Der Trocknerbehälter T hat für ein Fassungsvermögen von ca. 550 cm³ einen Innendurchmesser D von rund 100 mm und eine Höhe H von rund 100 mm. Sein Gewicht liegt bei ca. 490 g.

Der Trocknerbehälter T gemäß Fig. 2 ist ähnlich aufgebaut wie der Trocknerbehälter T gemäß Fig. 1. Unterschiedlich ist, daß die Anschlußeinrichtungen 11 so eingeformt sind, daß ein verdickter Wandbereich 19 konkave Erhebungen in der Bodenwand 5'' formt und die Fläche 16 annähernd auf der Höhe des Endes der Schürze 17 zu liegen kommt. Zwischen dem Innenumfangswandbereich 3' und dem Innenboden 5'' ist wiederum der harmonisch ausgerundete Übergang Ü eingeformt. Die Höhe H beträgt ebenfalls ca. 100 mm, wie auch der Innendurchmesser D ca. 100 mm beträgt. Für Trocknerbehälter T kleineren Fassungsvermögens kann entweder der Innendurchmesser D und/oder die Höhe H geringer gewählt werden. Es ist durchaus denkbar, von einem Basisteil (Behälterteil A) mit einem Innendurchmesser von ca. 100 mm ausgehend, für unterschiedliche Fassungsvermögen unterschiedlich hohe Behälterteile B zu benutzen. Obwohl dies nicht dargestellt wurde, kann zwischen den Gewinden 1, 2 eine Dichtung eingebracht werden. Ferner können die Rohranschlußkanäle 12, 13 an anderen Bereichen der Wand des Trocknerbehälters eingeformt sein. Beispielsweise wäre es durchaus denkbar, einen Kanal 13 in einem Behälterteil und den anderen Kanal 12 in einem anderen Behälterteil einzuformen. Bei dem Trocknerbehälter T sind Befestigungslaschen 18 nicht dargestellt.

## Patentansprüche

1. Trocknerbehälter (T) für ein Klimasystem, insbesondere für ein Fahrzeugklimasystem, der einen im wesentlichen zur Längsachse des Trocknerbehälters rotationssymmetrischen, geschlossenen Innenraum besitzt, aus zwei in einem in Umfangsrichtung umlaufenden Verbindungsbereich (V) miteinander verbundenen Behälterteilen (A, B) besteht, und integrierte Anschlußeinrichtungen (11) aufweist, **dadurch gekennzeichnet,** daß die beiden Behälterteile (A, B) Spritzguß-Formteile aus langfaserverstärktem Thermoplast (P) sind, daß der eine Behälterteil (A) im Verbindungsbereich (V) wenigstens ein innenliegendes Verbindungselement (1) aufweist, und daß zumindest in dem einen Behälterteil (A) der Übergang (Ü, 4) von einem Innenboden (5, 5', 5'') nach außen zur Innenumfangswand (3, 3') mit einem harmonischen, konkav gekrümmten Verlauf knick- und hinterschneidungsfrei ausgebildet ist.

2. Trocknerbehälter nach Anspruch 1, **dadurch gekennzeichnet,** daß die Behälterteile (A, B) aus mit ca. 35 - 70, vorzugsweise 40 - 60 Gew.-% langen Glasfasern (F), vorzugsweise ca. 10 mm langen Glasfasern (F), verstärktem, in einer Form spritzgußgeformtem Polypropylen oder Polyamid bestehen.

3. Trocknerbehälter nach Anspruch 1, **dadurch gekennzeichnet,** daß der Übergang (Ü) eine sich zur Innenumfangswand (3, 3') erweiternde Kegelfläche oder einen sich zur Innenumfangswand (3, 3') erweiternden Kugelausschnitt aufweist.

4. Trocknerbehälter nach Anspruch 1, **dadurch gekennzeichnet,** daß der Übergang (Ü) mit variierendem Krümmungsradius konkav gekrümmt ist.

5. Trocknerbehälter nach wenigstens einem der Ansprüche 1 bis 4, **dadurch gekennzeichnet,** daß auch der Innenboden (5', 10) eine die Krümmung des Übergangs (Ü) fortführende konkave Krümmung aufweist.

6. Trocknerbehälter nach wenigstens einem der Ansprüche 1 bis 5, **dadurch gekennzeichnet**, daß ein Behälterteil (B) ein Außengewinde (2) aufweist, das in ein in einer innenliegenden Aufnahme (8) eingeformtes Innengewinde (1) des anderen Behälterteils (A) einschraubbar ist, daß in der Aufnahme (8) eine umlaufende, annähernd zur Behälterachse radiale Schulter (9) zur Innenumfangswand (3') des Behälterteils (A) führt, und daß sich der Übergang (Ü) entweder bis an die Schulter (9) erstreckt oder in einem Abstand von der Schulter (3) in die Innenumfangswand (3') einläuft.

7. Trocknerbehälter nach Anspruch 6, **dadurch gekennzeichnet**, daß die Behälterteile (A, B) mit Außen- und Innengewinden (1, 2), mit der Aufnahme (8) und mit den Anschlußeinrichtungen (11) je einstückig spritzgußgeformt sind.

8. Trocknerbehälter nach Anspruch 1, **dadurch gekennzeichnet**, daß die Anschlußeinrichtungen (11) in lokal verdickt ausgebildeten Wandbereichen (15, 19) des einen und/oder des anderen Behälterteiles (A, B) eingeformte Rohranschlußkanäle (12, 13) mit wenigstens einer benachbarten, nur außenseitig offenen Verankerungsbohrung (14) sind.

9. Trocknerbehälter nach Anspruch 8, **dadurch gekennzeichnet**, daß die verdickten Wandbereiche (15) nach außen verdickt sind, und daß die Innenwand (10) in diesem Bereich glatt bzw. konkav gekrümmt ist.

10. Trocknerbehälter nach wenigstens einem der Ansprüche 1 bis 9, **dadurch gekennzeichnet**, daß zumindest an dem die Anschlußeinrichtungen (11) aufweisenden Behälterteil (A) eine umlaufende Schürze (17) einstückig angeformt ist, vorzugsweise mit einstückig davon abstehenden Befestigungslaschen (18).

11. Trocknerbehälter nach Anspruch 10, **dadurch gekennzeichnet**, daß der Behälterteil (B) eine außen angeformte Drehhilfe (7) aufweist.

12. Trocknerbehälter nach wenigstens einem der Ansprüche 1 bis 11, **dadurch gekennzeichnet**, daß er bei einem Fassungsvermögen von ca. 550 cm³ einen Innendurchmesser (D) von ca. 100 mm im Verbindungsbereich (V) aufweist und eine Wandstärke (S) von ca. 5 mm besitzt, und daß der Übergang (Ü) mit einem Radius von ca. 3,5 cm konkav gerundet ist.

## Claims

1. A drying-agent receptacle (T) for an air-conditioning system, in particular for a vehicular air-conditioning system, comprising a closed interior which is essentially rotationally symmetric with regard to the longitudinal axis of the drying-agent receptacle, said drying-agent receptacle consisting of two receptacle components (A, B), which are interconnected in a circumferentially extending connection area (V), and being provided with integrated connection means (11), **characterized in that** the two receptacle components (A, B) are injection-moulded parts consisting of longfibre reinforced thermoplastic material (P), that one receptacle component (A) is provided with at least one interior connection element (1) in the connection area (V), and that at least in said one receptacle component (A) the transition (Ü,4) from an interior bottom (5, 5', 5'') outwards towards the internal circumferential wall (3, 3') is formed such that a harmonius, concavely curved shape without any kinks or undercut portions is obtained.

2. A drying-agent receptacle according to claim 1, **characterized in that** the receptacle components (A, B) consist of polypropylene or polyamide reinforced with long glass fibres (F) contained in an amount of approx. 35 - 70, preferably 40 - 60 % by weight and having preferably a length of approx. 10 mm, and injection-moulded in a mould.

3. A drying-agent receptacle according to claim 1, **characterized in that** the transition (Ü) comprises a conical surface widening towards the internal circumferential wall (3, 3') or a section of a sphere widening towards said internal circumferential wall (3, 3').

4. A drying-agent receptacle according to claim 1, **characterized in that** the transition (Ü) is concavely curved with a varying radius of curvature.

5. A drying-agent receptacle according to at least one of the claims 1 to 4**, characterized in that** also the interior bottom wall (5', 10) shows a concave curvature continuing the curvature of the transition (Ü).

6. A drying-agent receptacle according to at least one of the claims 1 to 5, **characterized in that** one receptacle component (B) is provided with an external thread (2) which is adapted to be screwed into an internal thread (1) of the other receptacle component (A), said internal thread being formed in an inner reception means (8), that, within said reception means (8), a circumferentially extending shoulder (9), which is approximately radial to the receptacle axis, extends up to the internal circumferential wall (3') of the receptacle component (A), and that the transition (Ü) extends either up to said shoulder (9) or merges with the internal circumferential wall (3') in spaced relationship with said shoulder (9).

7. A drying-agent receptacle according to claim 6, **characterized in that** the receptacle components (A, B) are integrally formed with the external and internal threads (1, 2), the reception means (8) and the connection means (11) by means of injection moulding.

8. A drying-agent receptacle according to claim 1, **characterized in that** the connection means (11) are pipe-connection channels (12, 13) with at least one neighbouring anchoring hole (14) which is open only on the outer side, said channels and said hole being formed in wall portions (15, 19) which are locally enlarged in thickness and which belong to one and/or to the other of said receptacle components (A, B).

9. A drying-agent receptacle according to claim 8, **characterized in that** the thicker wall portions (15) are enlarged in thickness towards the outer side, and that the interior wall (10) is either flat or concavely curved in this area.

10. A drying-agent receptacle according to at least one of the claims 1 to 9, **characterized in that** at least the receptacle component (A) equipped with the connection means (11) has provided thereon a circumferentially extending skirt (17) which is formed integrally therewith and which is preferably provided with fastening ears (18) formed integrally therewith and projecting therefrom.

11. A drying-agent receptacle according to claim 10, **characterized in that** receptacle component (B) is provided with a turning aid (7) formed on the outer surface of said receptacle component.

12. A drying-agent receptacle according to at least one of the claims 1 to 11, **characterized in that**, in the case of a volumetric capacity of approx. 550 cm³, said drying-agent receptacle has an interior diameter (D) of approx. 100 mm in the connection area (V) and a wall thickness (S) of approx. 5 mm, and that the transition (Ü) is concavely rounded with a radius of approx. 3.5 cm.

## Revendications

1. Réservoir dessiccateur (T) pour un système de climatisation, en particulier pour un système de climatisation de véhicule, qui possède un espace intérieur fermé sensiblement à symétrie de révolution par rapport à l'axe longitudinal du réservoir dessiccateur, qui est formé de deux parties (A, B) reliées entre elles dans une zone de liaison (V) périphérique circulaire et qui présente des dispositifs de raccordement (11) intégrés, caractérisé en ce que les deux parties de réservoir (A, B) sont des pièces moulées par injection en un thermoplastique (P) renforcé par des fibres allongées, que l'une (A) des parties de réservoir comporte dans la zone de liaison (V) au moins un élément de liaison (1) situé à l'intérieur et qu'au moins dans ladite partie de réservoir (A), la transition (Ü, 4) d'un fond intérieur (5, 5', 5'') vers l'extérieur en direction de la paroi périphérique intérieure (3, 3') est réalisée avec une courbure harmonieuse concave sans coude ni contredépouille.

2. Réservoir dessiccateur selon la revendication 1, caractérisé en ce que les parties de réservoir (A, B) sont constituées d'un polyamide ou d'un polypropylène renforcé avec environ 35 à 70, de préférence 40 à 60% en poids de fibres de verre (F) allongées, de préférence de fibres de verre (F) d'une longueur d'environ 10 mm, et moulé par injection dans un moule.

3. Réservoir dessiccateur selon la revendication 1, caractérisé en ce que la transition (Ü) présente une surface conique s'élargissant en direction de la paroi périphérique intérieure (3, 3') ou un secteur sphérique s'élargissant en direction de la paroi périphérique intérieure (3, 3').

4. Réservoir dessiccateur selon la revendication 1, caractérisé en ce que la transition (Ü) présente une courbure concave dont le rayon varie.

5. Réservoir dessiccateur selon au moins une des revendications 1 à 4, caractérisé en ce que le fond intérieur (5', 10) présente également une courbure concave prolongeant la courbure de la transition (Ü).

6. Réservoir dessiccateur selon au moins une des revendications 1 à 5, caractérisé en ce qu'une partie de réservoir (B) comporte un filetage extérieur (2) qui peut être vissé dans un filetage intérieur (1) formé dans un logement (8) intérieur de l'autre partie de réservoir (A), que dans le logement (8), un épaulement (9) périphérique, radial approximativement par rapport à l'axe du réservoir mène à la paroi périphérique intérieure (3') de la partie de réservoir (A) et que la transition (Ü) s'étend soit jusqu'à l'épaulement (9) soit rentre dans la paroi périphérique intérieure (3') à distance de l'épaulement (9).

7. Réservoir dessiccateur selon la revendication 6, caractérisé en ce que les parties de réservoir (A, B) sont moulées par injection d'une seule pièce avec les filetages extérieur et intérieur (1, 2), avec le logement (8) et avec les dispositifs de raccordement (11).

8. Réservoir dessiccateur selon la revendication 1, caractérisé en ce que les dispositifs de raccordement (11) sont des canaux de raccordement de tuyaux (12, 13) formés dans des parties de paroi (15, 19) épaissies localement de l'une et/ou de l'autre partie de réservoir (A, B), avec au moins un trou d'ancrage (14) voisin ouvert uniquement sur le côté extérieur.

9. Réservoir dessiccateur selon la revendication 8, caractérisé en ce que les parties de paroi (15) épaissies sont épaissies vers l'extérieur et que la paroi intérieure (10) est lisse, respectivement concave, dans cette zone.

10. Réservoir dessiccateur selon au moins une des revendications 1 à 9, caractérisé en ce qu'un tablier (17) périphérique est moulé, d'une seule pièce, au moins sur la partie de réservoir (A) comportant les dispositifs de raccordement (11), de préférence avec des pattes de fixation (18) partant, d'une seule pièce, dudit tablier.

11. Réservoir dessiccateur selon la revendication 10, caractérisé en ce que la partie de réservoir (B) comporte un élément facilitant la rotation (7) moulé extérieurement.

12. Réservoir dessiccateur selon au moins une des revendications 1 à 11, caractérisé en ce que pour une capacité d'environ 550 cm³, le réservoir présente un diamètre intérieur (D) d'environ 100 mm dans la zone de liaison (V) et possède une épaisseur de paroi (S) d'environ 5 mm et que la transition (Ü) est arrondie de manière concave avec un rayon d'environ 3,5 cm.
